Europäisches Patentamt

European Patent Office

Office européen des brevets

(19)

(11) EP 0 831 668 A1

## (12) DEMANDE DE BREVET EUROPEEN

(43) Date de publication:
25.03.1998 Bulletin 1998/13

(51) Int Cl.6: **H04Q 7/36**, H04Q 11/04

(21) Numéro de dépôt: 97402137.0

(22) Date de dépôt: 15.09.1997

(84) Etats contractants désignés:
**AT BE CH DE DK ES FI FR GB GR IE IT LI LU MC NL PT SE**
Etats d'extension désignés:
**AL LT LV RO SI**

(30) Priorité: 18.09.1996 FR 9611371

(71) Demandeur: **FRANCE TELECOM**
**75015 Paris (FR)**

(72) Inventeurs:
• **Desseignes, Christophe**
**94360 Bry-sur-Marne (FR)**
• **Blondeau, Olivier**
**78120 Rambouillet (FR)**
• **Despres, François**
**91570 Bievres (FR)**

(74) Mandataire: **Fréchède, Michel**
**Cabinet Plasseraud**
**84, rue d'Amsterdam**
**F-75440 Paris Cédex 09 (FR)**

(54) **Protocole d'intercommunication auto-adaptatif entre bornes fixes radio d'un réseau de téléphonie cellulaire**

(57) L'invention concerne un protocole d'interconnexion entre bornes fixes radio $BFR_1$ d'un réseau de téléphonie cellulaire.

En vue de la transmission de messages de gestion, il consiste à attribuer (1000) à chaque B.F.R. du réseau des coordonnées géographiques, et à constituer (1001) pour tout ensemble de deux bornes voisines une interconnexion en anneau virtuel puis à transmettre (1002) les messages de gestion entre bornes voisines, identifiées à partir de leurs coordonnées géographiques, sur l'anneau virtuel, selon un processus d'intercommunication auto-adaptatif.

Application à la gestion des réseaux de radiotéléphonie cellulaire en transmission en mode asynchrone ou DQDB.

INITIALISATION

ATTRIBUTION DE COORDONNÉES D'ADRESSE GÉOGRAPHIQUE x y z A CHAQUE BORNE FIXE RADIO DU RÉSEAU — 1000

CONSTITUTION D'UNE INTERCONNEXION EN ANNEAU VIRTUEL — 1001

DÉTERMINATION DES BORNES VOISINES — 1001a

CORRESPONDANCE DES COORDONNÉES DES BORNES VOISINES — 1001b

TRANSMISSION

TRANSMISSION DES MESSAGES DE GESTION ENTRE BORNES VOISINES — 1002

INTERCOMMUNICATION AUTO - ADAPTATIVE

FIG.2a.

# Description

La présente invention concerne un protocole d'intercommunication auto-adaptatif entre bornes fixes radio d'un réseau de téléphonie cellulaire. Ce protocole a pour objet de permettre la transmission de messages de gestion de ce réseau entre les différentes bornes fixes radio constituant ce dernier.

A l'heure actuelle, les réseaux de télécommunication jouent un rôle croissant dans la vie économique des pays industrialisés, ces réseaux permettant l'échange d'informations, en temps réel, entre les acteurs économiques de ces derniers.

C'est en particulier le cas pour ce qui concerne les réseaux de radiotéléphonie mobile, lesquels sont amenés à permettre la transmission d'un volume d'information de plus en plus important.

Dans les réseaux précités, la transmission de ces informations, signal de parole pour les réseaux de radiotéléphonie, est le plus souvent effectuée sous forme numérique en mode asynchrone dit mode ATM pour Asynchronous Transmissions Mode, le signal de parole étant échantillonné et numérisé, puis subdivisé en cellules correspondant à des trames de signal de parole correspondant à un ou plusieurs intervalles de temps successifs.

Chaque cellule comprend essentiellement un champ d'adresse de destination et un champ de données, représentatives d'une partie de l'information à transmettre. Le routage de chaque cellule est effectué à partir de l'adresse de destination par commutation au niveau de chaque noeud du réseau, cette adresse étant réactualisée à chaque commutation, pour une commutation ultérieure.

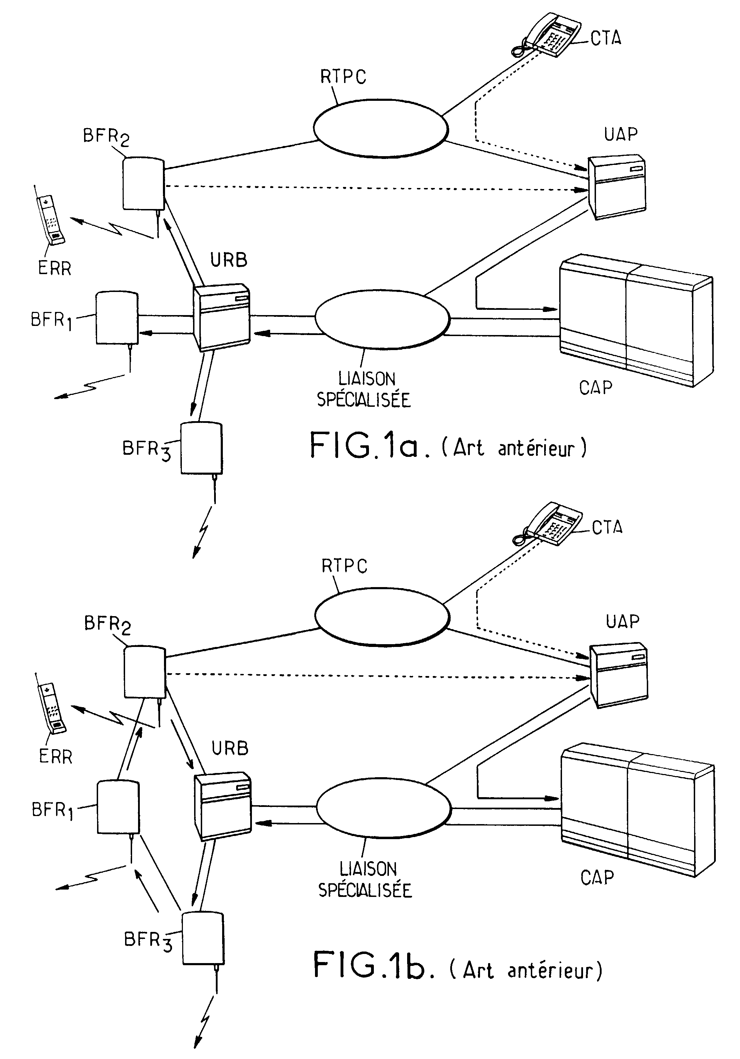

Dans le cas plus spécifique des réseaux tels que les réseaux de radiotéléphonie cellulaire, ces réseaux peuvent consister en une pluralité de bornes fixes radio, lesquelles, ainsi que représente en figure 1a, sont reliées et interconnectées en grappes ou arbres par l'intermédiaire de concentrateurs ou unités de raccordement, lesquels sont interconnectés à des commutateurs. C'est en particulier le cas des réseaux GSM et POINTEL. D'autres techniques d'interconnexion des bornes peuvent être utilisées, telle que par exemple, ainsi que représenté en figure 1b, au moins au niveau de chaque concentrateur, l'interconnexion des bornes fixes radio selon un anneau physique. L'anneau physique est constitué par un support physique de connexion et de transmission tel qu'un câble de transmission permettant d'interconnecter un concentrateur et une pluralité donnée de bornes fixes radio selon un circuit fermé. La mise en oeuvre d'un anneau physique présente un avantage majeur en raison du fait que même dans le cas d'une interruption accidentelle du câble de transmission les bornes fixes radio, restant interconnectées en deçà et au-delà de l'interruption, peuvent être atteintes par le concentrateur, par simple gestion du sens de transmission des cellules vers l'une puis l'autre extrémité de l'interruption.

Dans tous les cas, quel que soit le type d'interconnexion utilisé, l'utilisation efficace de ces réseaux par un combiné téléphonique mobile implique, notamment au cours du déplacement de ce mobile dans ce réseau, une gestion efficace des bornes fixes radio voisines de toute borne fixe radio de ce réseau. La gestion rationnelle des bornes voisines d'un réseau de téléphonie cellulaire est un facteur déterminant de l'efficacité "physique" et économique de ce réseau et nécessite des mises à jour particulièrement lourdes et coûteuses pour l'opérateur de ce réseau. C'est notamment le cas dans le cas des réseaux GSM et POINTEL précités, d'une première part lors de l'installation de bornes fixes radio supplémentaires dans un réseau existant. C'est également le cas, d'une deuxième part, sur un réseau existant, afin d'assurer le transfert automatique intercellulaire ou T.A.I., désigné en langage anglo-saxon par gestion du "handover", lors du passage d'un combiné téléphonique mobile de la zone de couverture d'une première borne fixe radio à celle d'une deuxième borne fixe radio, soit d'une cellule donnée du réseau à une cellule adjacente de celle-ci. Le T.A.I. est effectué par transfert du contexte relatif à la communication de l'ancienne à la nouvelle borne fixe radio. En effet, dans les cas précités, la gestion des bornes voisines du réseau est classiquement effectuée par configuration de listes de bornes voisines, la mise à jour de ces listes étant à la charge de l'opérateur du réseau.

La présente invention a pour objet de remédier aux inconvénients précités par la mise en oeuvre d'un protocole d'intercommunication auto-adaptatif entre bornes fixes radio d'un réseau de téléphonie cellulaire permettant notamment une gestion simplifiée des bornes voisines, quel que soit le type d'interconnexion des bornes fixes radio du réseau.

Un autre objet de la présente invention est la mise en oeuvre du protocole précédemment cité dans un but de simplification de la gestion du T.A.I.

Un autre objet de la présente invention est en outre la mise en oeuvre du protocole précédemment cité dans le but d'une amélioration de la réception des appels entrants sur le réseau de téléphonie cellulaire, ces appels entrants, visant à établir la communication avec un combiné mobile, étant issus d'un combiné d'abonné téléphonique interconnecté au réseau téléphonique commuté.

Un autre objet de la présente invention est enfin la mise en oeuvre du protocole précédemment cité afin de faciliter la mise en place d'algorithmes distribués d'allocation dynamique de canaux permettant aux bornes fixes radio d'une même zone, c'est-à-dire aux bornes voisines de toute borne fixe radio de ce réseau, de procéder de manière automatique à une distribution dynamique des ressources radio.

Le protocole d'intercommunication entre bornes fixes radio d'un réseau de téléphonie cellulaire entre les bornes fixes radio de ce réseau, objet de la présente invention, est remarquable en ce qu'il consiste au moins à attribuer à chaque borne fixe radio appartenant à ce réseau des coordonnées géographiques et à constituer pour tout ensemble de deux bornes fixes radio successives, constituant des bornes voisines, une interconnexion en anneau virtuel. Les messages de gestion sont alors transmis entre bornes voisines, les bornes voisines étant identifiées à partir des coordonnées géographiques sur l'anneau virtuel, ce qui permet d'effectuer la transmission des messages de gestion par intercommunication auto-adaptative entre l'ensemble des bornes fixes radio du réseau.

Le protocole objet de la présente invention trouve application sur tout type de réseau de radiotéléphonie mobile pour lesquels les réseaux d'accès aux bornes fixes-radio, support physique de transmission des messages de gestion, gèrent les connexions d'anneaux virtuels, en particulier liaison de type asynchrone ATM ou DQDB pour Distributed Queue Dual Bus en langage anglo-saxon.

Il trouve en particulier application, sur ce type de réseaux d'accès, à la gestion T.A.I., à l'amélioration de la réception des appels entrants et à la mise en place d'algorithmes distribués d'allocation dynamique de canaux permettant aux bornes fixes radio d'une même zone d'effectuer une auto-distribution dynamique des ressources radio.

Il sera mieux compris à la lecture de la description et à l'observation des dessins dans lesquels, outre les figures 1a et 1b relatives à deux types d'interconnexion physique des réseaux, connus de l'état de la technique,

- la figure 2a représente, sous forme d'un schéma fonctionnel, un organigramme des étapes nécessaires à la mise en oeuvre du protocole d'intercommunication objet de la présente invention ;
- la figure 2b représente, sous forme illustrative, un exemple de mise en oeuvre d'une première étape du protocole d'intercommunication objet de la présente invention ;
- la figure 2c représente, de manière illustrative, la configuration d'un message de gestion lorsque la transmission de ces messages, conformément à un exemple de réalisation du protocole d'intercommunication, est effectuée en mode asynchrone ATM ;
- les figures 2d et 2e représentent, sous forme illustrative, un exemple de mise en oeuvre d'une deuxième étape du protocole d'intercommunication objet de la présente invention dans le cas d'un réseau pour lequel l'interconnexion physique est réalisée selon la figure la respectivement la figure 1b ;
- les figures 3a, 3b et 3c représentent la structure des messages de gestion échangés conformément au protocole d'intercommunication objet de la présente invention dans le cadre d'applications à la simplification de la gestion du T.A.I., à l'amélioration des appels entrants sur le réseau de téléphonie cellulaire et à la mise en place d'algorithmes distribués d'allocation dynamique de canaux pour réaliser une distribution dynamique automatique des ressources radio.

Une description plus détaillée du protocole d'intercommunication entre bornes fixes radio d'un réseau de téléphonie cellulaire conforme à l'objet de la présente invention et permettant la transmission de messages de gestion du réseau entre ces bornes sera maintenant donné ci-après.

En premier lieu, une description du mode d'interconnexion physique des bornes fixes radio pour la transmission de ces messages de gestion sera donnée en liaison avec les figures 1a et 1b.

Sur la figure 1a, on a représenté la structure générale d'un réseau tel que par exemple un réseau de téléphonie cellulaire POINTEL, lequel est constitué par au moins un émetteur-récepteur radio mobile, noté ERR, par abonné mobile en liaison hertzienne avec une pluralité de bornes fixes radio notées $BFR_1$ à $BFR_3$.

Dans le mode d'interconnexion physique représenté en figure la, les bornes fixes radio sont interconnectées en structure arborescente par des unités de raccordement de borne, notées URB, encore désignées par concentrateurs, à un centre d'authentification d'abonné mobile noté CAP.

L'interconnexion de l'URB au centre d'authentification d'abonné mobile est réalisée par une liaison spécialisée, l'ensemble constituant le réseau de téléphonie cellulaire proprement dit.

D'une manière générale, l'interconnexion entre le combiné téléphonique d'un abonné du réseau public commuté RTPC est assurée par une unité d'accès au réseau de téléphonie mobile UAP. Le combiné téléphonique d'abonné du réseau téléphonique public commuté RTPC est noté CTA.

Dans ce type de réseau de téléphonie cellulaire, une procédure ou protocole d'acheminement d'appels entrants, par exemple, du réseau téléphonique public commuté émis par le combiné téléphonique CTA, met en oeuvre des opérations spécifiques rendues nécessaires en raison de la configuration même du réseau de téléphonie cellulaire. Cette procédure est connue de l'état de la technique et fait appel à différentes étapes, lesquelles permettent de réaliser l'aboutement de l'appel entrant émis par le CTA vers l'émetteur-récepteur radio ERR suite à une procédure d'interrogations successives des bornes fixes radio gérées par une même URB.

Un deuxième mode de connexion physique des bornes fixes radio $BFR_1$ à $BFR_3$ peut également être envisagé, ainsi que représenté en figure 1b, figure dans laquelle les mêmes références désignent les mêmes éléments que dans la figure 1a.

Dans le cas représenté en figure 1b, l'unité de raccordement des bornes URB et les bornes fixes radio $BFR_1$ à $BFR_3$ sont alors interconnectées physiquement par une ligne en anneaux permettant la transmission de messages de gestion successivement d'une borne fixe radio à la suivante sur la trajectoire de l'anneau ainsi constitué.

La gestion de l'un ou l'autre sens de transmission des messages de gestion sur l'anneau physique d'interconnexion permet d'assurer également, de la même manière que dans le cas de la figure 1a, la transmission de ces messages de gestion à l'ensemble des bornes fixes radio gérées par une même unité de raccordement URB, même dans le cas de la coupure accidentelle de l'une des liaisons entre bornes fixes radio ou entre bornes fixes radio et unité de raccordement URB.

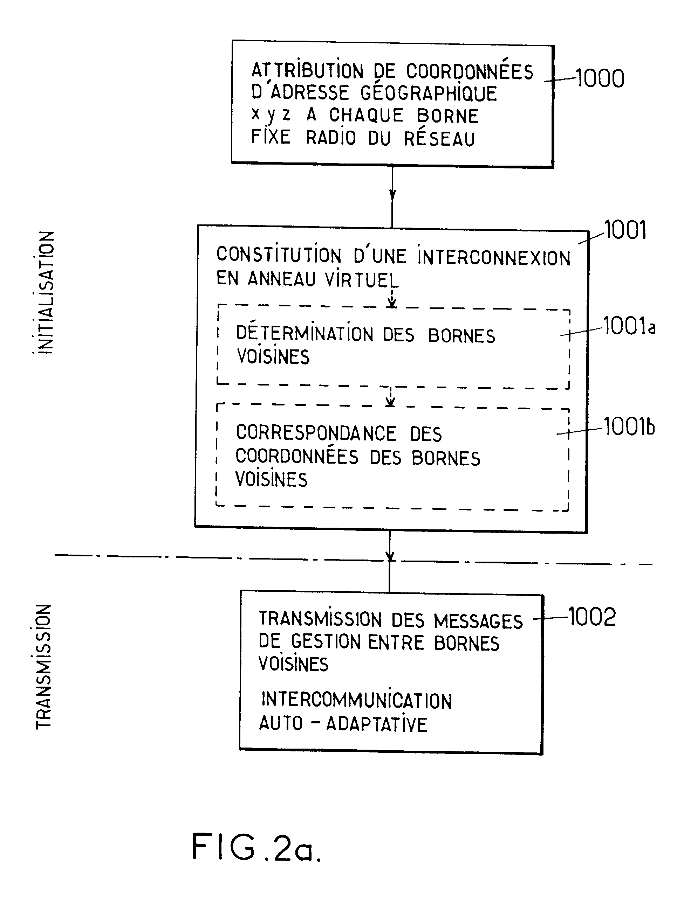

Le protocole d'intercommunication entre bornes fixes radio d'un réseau de téléphonie cellulaire pour la transmission de messages de gestion de ce réseau entre ces bornes, conforme à l'objet de la présente invention, sera maintenant décrit en liaison avec la figure 2a et les figures suivantes.

Ainsi que représenté sur la figure 2a, le protocole d'intercommunication, objet de la présente invention, consiste en une étape 1000 à attribuer à chaque borne fixe radio du réseau de téléphonie cellulaire des coordonnées géographiques. Les coordonnées géographiques peuvent être des coordonnées dans un espace tridimensionnel, par exemple, cet espace tridimensionnel x, y, z pouvant dans la majorité des cas être réduit à un espace bidimensionnel x, y, sans nuire à la généralité du protocole, objet de la présente invention.

On indique que l'attribution de coordonnées d'adresses géographiques peut être réalisée à partir d'un repère cartographique par exemple et, le cas échéant, à l'aide d'un système de positionnement par satellite tel que le système GPS, par exemple.

L'étape 1000 précitée est alors suivie d'une étape 1001 consistant à constituer pour tout ensemble de deux bornes fixes radio successives constituant des bornes voisines une interconnexion en anneau virtuel.

D'une manière générale, on indique que l'interconnexion des bornes voisines, c'est-à-dire de deux bornes fixes radio successives en anneau virtuel peut, conformément à un aspect particulièrement avantageux du protocole objet de la présente invention, être réalisé soit sur un réseau de bornes fixes radio interconnectées à l'unité de raccordement URB sous forme arborescente, ainsi que représenté en figure 1a, soit dans le cas d'un réseau de téléphonie cellulaire dont les bornes fixes radio sont interconnectées à l'unité de raccordement URB par l'intermédiaire d'un anneau physique fixe, ainsi que représenté en figure 1b.

On notera d'ailleurs, tant sur la figure 1a que sur la figure 1b, qu'on a représenté, afin de ne pas surcharger le dessin, une seule unité de raccordement, étant entendu qu'un réseau concret comporte plusieurs unités de raccordement URB et que le cas échéant, le protocole objet de la présente invention peut être mis en oeuvre pour un réseau dont les différentes unités de raccordement URB sont reliées aux différentes bornes fixes radio gérées par chaque unité de raccordement selon l'une ou l'autre des connexions physiques représentées en figure 1a et/ou 1b.

Ainsi qu'on l'a représenté de manière schématique et symbolique sur la figure 2a, on indique que l'étape 1001 de constitution d'une interconnexion en anneau virtuel peut avantageusement consister en une étape de détermination des bornes voisines notées 1001a, suivie d'une étape 1001b consistant en une mise en correspondance des coordonnées des bornes voisines. Les étapes 1001a et 1001b seront décrites de manière plus détaillée ultérieurement dans la description.

Les étapes 1000 et 1001, telles que représentées en figure 2a, correspondent en fait à une phase d'initialisation du réseau. La phase d'initialisation du réseau est alors suivie d'une phase de transmission, laquelle consiste en une étape notée 1002, successive à l'étape 1001 précitée.

L'étape 1002 consiste à transmettre les messages de gestion entre bornes voisines par l'intermédiaire de l'interconnexion en anneau virtuel. Bien entendu, les bornes voisines sont identifiées à partir des coordonnées géographiques sur l'anneau virtuel, une telle identification permettant alors la transmission des messages de gestion par une intercommunication auto-adaptative entre l'ensemble des bornes fixes radio voisines du réseau.

Le caractère auto-adaptatif de l'intercommunication résulte de la transmission des messages de gestion aux bornes voisines concernées du réseau par l'opération à réaliser pour assurer la transmission radioélectrique de messages provenant de/ou destinés à l'émetteur-récepteur radio mobile ERR utilisateur de ce réseau de téléphonie cellulaire mobile, quelle que soit la position de cet émetteur-récepteur radio mobile par rapport aux bornes du réseau, ainsi qu'il sera décrit ultérieurement dans la description.

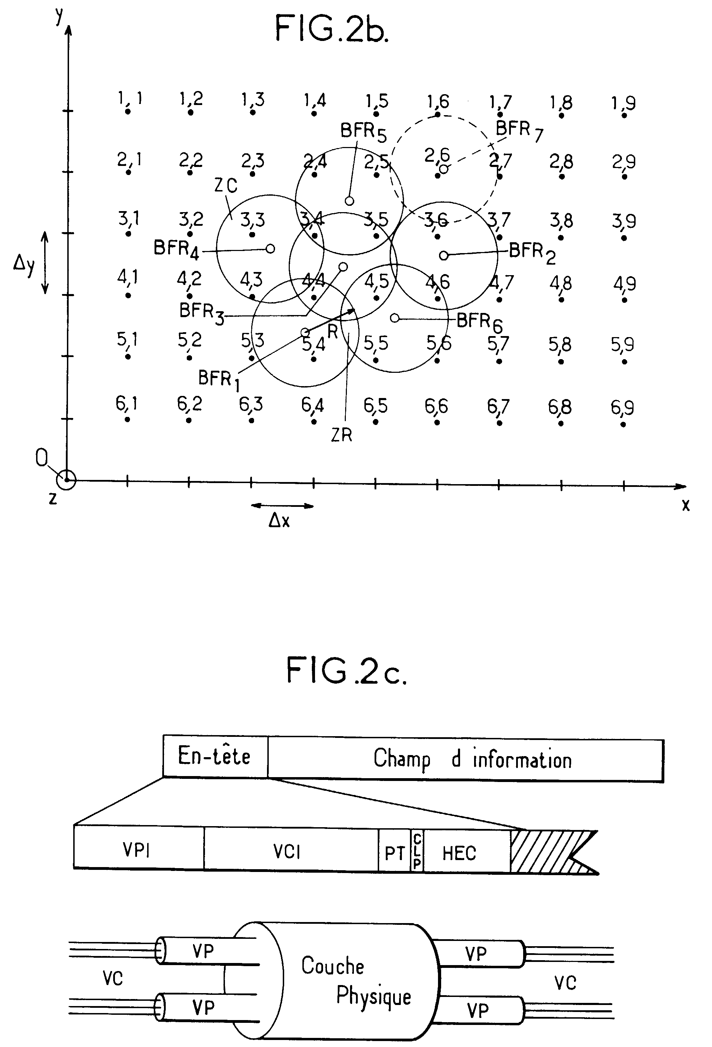

Une description plus détaillée de la mise en oeuvre des différentes étapes constitutives du protocole d'intercommunication, objet de la présente invention, sera maintenant donnée en liaison avec les figures 2b à 2e.

Sur la figure 2b, on a représenté, à titre illustratif, l'opération consistant à attribuer à chaque borne fixe radio du réseau des coordonnées géographiques.

Pour un réseau comportant à titre d'exemple non limitatif six bornes fixes radio notées $BFR_1$ à $BFR_6$ telles que disposées sur la figure 2b, dans une représentation bidimensionnelle par exemple, on associe à ce réseau un repère bidimensionnel Oxy et un réseau maillé de pas $\Delta x$, $\Delta y$ et le cas échéant, $\Delta z$. Les valeurs de pas précitées peuvent avoir ou non la même valeur dimensionnelle.

Conformément à un aspect avantageux du protocole objet de la présente invention, les coordonnées géographiques vérifient la relation :

$$k_x = E(x/\Delta x)$$

$$k_y = E(y/\Delta y)$$

$$k_z = E(z/\Delta z).$$

Dans cette relation, outre les valeurs $\Delta x$, $\Delta y$, $\Delta z$ du pas du réseau maillé dans les directions correspondantes, $k_x$, $k_Y$ et $k_z$ représentent un coefficient réel représentatif de l'écart dans la direction correspondante x, y ou z de la borne fixe par rapport à l'origine O et le symbole E désigne la partie entière du rapport $x/\Delta x$, $y/\Delta y$ ou $z/\Delta z$.

Compte tenu de la règle d'attribution des coordonnées géographiques précitées, sur l'exemple donné sur la figure 2b, à la borne fixe radio $BFR_1$ est attribuée la coordonnée géographique 5,4 du réseau maillé constitutif du repère utilisé. Chaque borne fixe radio du réseau peut alors être avantageusement repérée par l'intermédiaire des coordonnées géographiques ainsi attribuées, grâce aux coefficients $k_x$, $k_Y$, $k_z$.

En ce qui concerne la sous-étape 1001a de la figure 2a, consistant à la détermination des bornes voisines, on indique que les bornes voisines telles que représentées par exemple sur la figure 2b, sont déterminées par l'existence d'une zone de recouvrement ZR entre les zones de couverture ZC de deux bornes du réseau.

Ainsi, pour des bornes fixes radio présentant une zone de couverture sensiblement circulaire, ainsi que représenté en figure 2b, la zone de recouvrement entre deux cellules voisines correspond à l'intersection des zones de couverture de chacune.

On indique, bien entendu, que le rayon R de chaque zone de couverture est déterminé d'une part par le type de réseau de radiotéléphonie cellulaire considéré et par la configuration du terrain sur lequel le réseau est implanté, par exemple.

Pour le cas d'un réseau de radiotéléphonie mobile DECT, les bornes fixes radio ont une portée en extérieur, c'est-à-dire un rayon R, de l'ordre de 150 mètres. Dans un tel cas, le maillage du réseau de repérage des bornes peut être choisi égal à une valeur de l'ordre de la portée théorique de chaque borne fixe radio, soit $\Delta x = \Delta y = 150$ mètres.

La détermination des bornes voisines à l'étape 1001a est alors effectuée par simple critère d'intersection ou de non-intersection des zones de couverture précitées.

La mise en correspondance des coordonnées des bornes voisines à l'étape 1001b peut alors être effectuée sur critère de distance physique des centres des zones de couverture de chaque borne fixe radio, deux bornes fixes radio étant considérées comme voisines lorsque la distance des centres de leur zone de couverture est inférieure à 2R. Bien entendu, l'opération précitée permet alors de constituer une liste des bornes voisines. En particulier, dans l'exemple de la figure 2b, l'ensemble des bornes voisines est donné par :

- $BFR_1$, $BFR_3$ ; $BFR_1$, $BFR_4$ ; $BFR_1$, $BFR_6$ ;
- $BFR_3$, $BFR_4$ ; $BFR_3$, $BFR_5$ ; $BFR_3$, $BFR_2$ ; $BFR_3$, $BFR_6$ ;
- $BFR_4$, $BFR_5$ ;
- $BFR_5$, $BFR_2$ ;
- $BFR_2$, $BFR_6$.

La mise en correspondance des coordonnées des bornes voisines de la sous-étape 1001b est alors effectuée à partir des couples de bornes voisines et de leurs adresses ou coordonnées géographiques précitées et l'interconnexion en anneau virtuel des différentes bornes voisines est effectuée différemment selon la nature de l'interconnexion physique des bornes fixes radio constitutives du réseau à l'unité de raccordement URB.

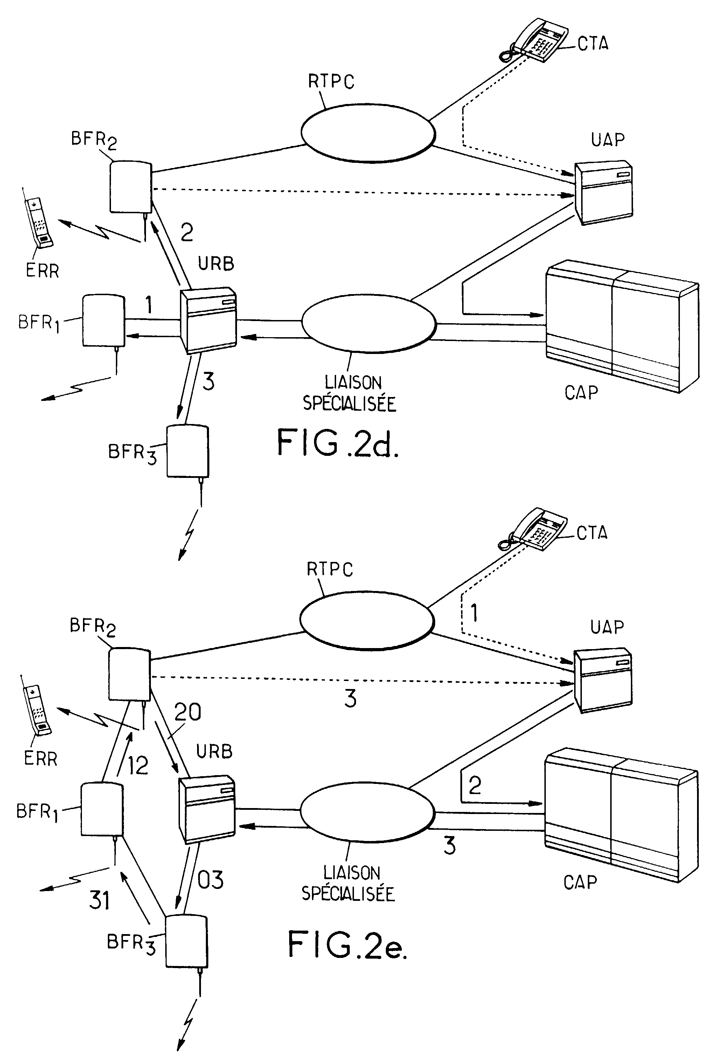

Dans le cas où, ainsi que représenté en figure 2d, l'interconnexion est réalisée à l'unité de raccordement URB sous forme arborescente, l'interconnexion en anneau virtuel des différentes bornes fixes radio et en particulier de deux bornes fixes radio successives consiste, à partir d'une liste des coordonnées géographiques des bornes voisines, c'est-à-dire des couples de coordonnées géographiques des bornes fixes voisines déterminées précédemment, mémorisées par exemple au niveau de l'unité de raccordement URB, à transmettre les messages de gestion séquentiellement à la borne fixe radio $BFR_1$ puis à la borne fixe radio $BFR_2$ puis à la borne fixe radio $BFR_3$, étant supposé que les bornes fixes radio $BFR_1$ et $BFR_2$ sont voisines et que les bornes fixes radio $BFR_2$ et $BFR_3$ sont également voisines. Dans ce cas, on constate bien que l'interconnexion en anneau virtuel permet d'assurer la transmission de tous les messages de gestion à l'ensemble des bornes voisines du réseau aux deux bornes fixes radio successives.

Dans le cas, au contraire, de la figure 2e, dans lequel les bornes fixes radio sont reliées physiquement à l'unité de raccordement URB par l'intermédiaire d'un anneau physique, c'est-à-dire par une ligne de transmission interconnectant en fait les bornes fixes radio et l'unité de raccordement en circuit fermé, pour des bornes fixes radio voisines telles que $BFR_1$, $BFR_2$ ; $BFR_2$, $BFR_3$ ; $BFR_3$, $BFR_1$ l'interconnexion en anneau virtuel de deux bornes voisines successives consiste à partir de la liste des coordonnées géographiques correspondantes établies par exemple et mémorisées au niveau de l'unité de raccordement URB à transmettre à chaque borne fixe radio les coordonnées géographiques de ses bornes fixes radio voisines.

Dans un tel cas, les messages de gestion issus de l'unité de raccordement URB peuvent alors être transmis, par exemple, selon le sens de transmission choisi par l'unité de raccordement URB à la borne fixe radio $BFR_3$, selon une transaction désignée par 0-3 sur la figure 2e puis de la borne fixe radio $BFR_3$ vers la borne fixe radio $BFR_1$ selon la transaction 3-1 de la borne fixe radio $BFR_1$ vers la borne fixe radio $BFR_2$ selon la transaction 1-2 et enfin, de la borne fixe radio $BFR_2$ vers l'unité de raccordement URB selon la transaction 2-0.

On constate également que grâce à la connexion en anneau virtuel, l'ensemble des bornes fixes radio constitutives du réseau reçoit alors chaque message de gestion par transmission successive d'une borne voisine à la suivante.

D'une manière générale, on indique que l'interconnexion en anneau virtuel des bornes voisines consiste, au niveau de chaque borne fixe radio, à établir un ensemble d'identificateurs de circuits des bornes voisines, identificateurs notés VCI.

Une description plus détaillée de la constitution des identificateurs de circuits de bornes voisines sera maintenant donnée en liaison avec la figure 2c dans le cas particulier non limitatif, donné à titre d'exemple, d'une liaison en mode asynchrone ATM entre bornes voisines successives. On rappelle toutefois qu'en mode DQDB le principe reste le même.

Ainsi que représenté sur la figure 2c, on rappelle qu'une cellule d'informations transmise en mode ATM comporte 53 octets, les 5 premiers octets contenant l'en-tête de la cellule d'information et les 48 octets restants contenant le champ d'information proprement dit.

On comprend en particulier que dans le cadre de la mise en oeuvre du protocole objet de la présente invention, l'en-tête permet de diriger les informations de gestion contenues dans le champ d'information vers les différentes bornes fixes radio constitutives du réseau.

Dans le champ d'en-tête, le dernier octet désigné par HEC sur la figure 2c, correspond à un code correcteur d'erreurs portant sur les 4 octets précédant ce dernier octet. Les 4 premiers octets comportant donc 32 bits contiennent successivement :

-   un champ d'identification noté VPI codé sur 12 bits, ce champ correspondant à un champ dit de conduit virtuel pour "Virtual Path Identifier" permettant en fait d'assurer la commutation des messages de gestion vers l'unité de raccordement URB appropriée. En fait, le champ d'identification VPI peut être utilisé dans le sous-réseau formé par l'URB et les bornes fixes radio ;
-   ce champ de conduit est suivi d'un champ de canal ou de circuit virtuel noté VCI précité, constituant l'identificateur de circuit des bornes voisines conformément au protocole objet de la présente invention. Ce champ de circuit VCI pour "Virtual Channel Identifier" permet au sein d'un même conduit d'identifier les messages destinés aux différentes bornes fixes radio. Le champ VCI est codé sur 16 bits ;
-   un champ PT codé sur 3 bits est en outre prévu, lequel permet de coder le type de contenu du message, c'est-à-dire de l'information contenue dans le champ d'information. Le champ PT précité pouvant permettre d'identifier une information concernant le réseau ou le cas échéant, l'émetteur-récepteur radio ERR concerné ;
-   enfin, un dernier champ codé sur 1 bit, noté CLP, permet d'attribuer par l'information contenue dans le champ d'information un ordre de priorité ou un ordre d'importance permettant de qualifier l'information transportée. Lorsque le champ CLP a la valeur 1, la cellule peut, le cas échéant, être détruite alors que lorsque le champ CLP a la valeur 0, l'information transportée dans le champ d'information doit prioritairement être conservée.

Conformément à un aspect particulièrement avantageux du protocole objet de la présente invention, on indique que les identificateurs de circuits des bornes voisines constitués par le champ VCI dans l'exemple précité correspondent alors aux coordonnées géographiques de chaque borne fixe radio voisine telle que définie précédemment.

On indique alors que pour des bornes fixes radio présentant une zone de voisinage, c'est-à-dire une intersection des zones de recouvrement déterminées en émission-réception, chaque identificateur de circuit VCI des bornes voisines est formé par deux valeurs, fonction des coordonnées géographiques et de la taille choisie pour la zone de voisinage des bornes fixes radio.

On comprend que la fonction précitée dépend à la fois du pas du réseau et de la portée réelle de chaque borne fixe radio, c'est-à-dire de la distance R ou rayon de la zone de couverture.

Ainsi, l'interconnexion en anneau virtuel dans l'exemple donné relatif à la transmission en mode asynchrone ATM permet alors d'attribuer pour chaque borne de raccordement URB un champ VPI ou champ de conduit déterminé pour la borne de raccordement URB considérée ainsi que des champs de canaux VCI contenant des informations relatives aux coordonnées géographiques de chaque borne voisine.

Ainsi, dans le cas d'un réseau de téléphonie cellulaire existant, la modification de ce réseau tel que le réseau représenté en figure 2b par exemple, par introduction d'une nouvelle borne fixe radio, la borne $BFR_7$ représentée en pointillés sur la même figure 2b, le protocole objet de la présente invention permet alors une réactualisation de la configuration de ce réseau particulièrement simple et efficace dans la mesure où la déclaration des bornes voisines pour actualiser ce réseau est sensiblement supprimée. Pour toute nouvelle borne fixe radio installée, telle que la borne $BFR_7$, celle-ci émet tout message de gestion repéré par les coordonnées géographiques de cette borne, ici les coordonnées 3, 6, constitutives du champ VCI. Toute borne qui comprend dans sa liste des champs VCI de bornes voisines possibles le champ VCI de coordonnées 3, 6 correspondant, traite alors les messages de gestion comme provenant d'une borne voisine. Bien entendu, toute borne fixe radio, en particulier toute nouvelle borne fixe radio installée, détermine et établit une liste des coordonnées géographiques des bornes fixes radio voisines possibles, à partir des seules coordonnées géographiques adjacentes, le caractère adjacent de ces coordonnées pouvant être défini de manière arbitraire.

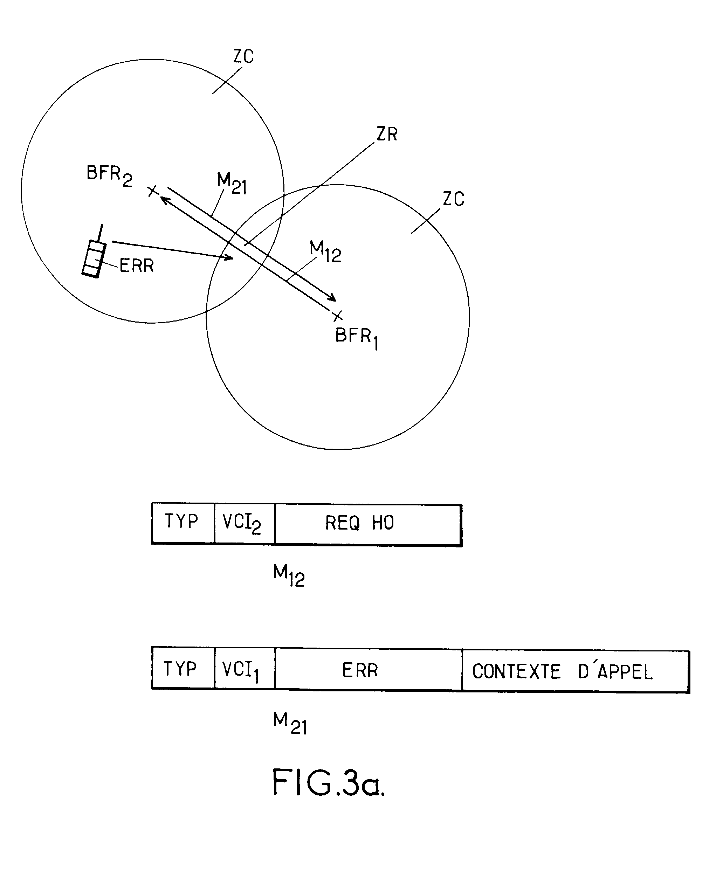

Une description plus détaillée de la mise en oeuvre du protocole d'intercommunication, objet de la présente invention, sera maintenant donnée dans le cas de la gestion du T.A.I. ou "hand-over" lors du passage d'un émetteur-récepteur radiomobile ERR d'une borne fixe radio actuelle, la borne 2 sur la figure 3a à une borne fixe radio future, la borne 1 sur la même figure au cours du déplacement du mobile considéré.

Lors d'une telle transition, il est bien entendu nécessaire, conformément à la procédure habituelle dans les réseaux de téléphonie cellulaire, de transférer automatiquement le contexte de l'application considérée.

Afin d'assurer cette transmission, et conformément au protocole objet de la présente invention, les messages de gestion peuvent comprendre, ainsi que représenté sur la figure 3a, un message de requête de transfert automatique, le message $M_{12}$ transmis de la borne fixe radio future $BFR_1$ vers la borne fixe radio actuelle $BFR_2$. Ce message de requête $M_{12}$ comprend au moins un champ d'en-tête d'identification de type de message désigné par TYP, un champ d'adresse de la borne fixe radio actuelle $VCI_2$ relatif à la borne fixe radio $BFR_2$ et un champ de requête de transfert du T.A.I. désigné par REQ HO comportant notamment l'identification de la borne fixe radio $BFR_1$, borne fixe radio future.

En réponse à ce message de requête, un message de réponse de transfert de T.A.I. est adressé, le message $M_{21}$ de la borne fixe radio actuelle $BFR_2$ vers la borne fixe radio future $BFR_1$. Ce message de réponse de transfert de T.A.I. comprend au moins :

- un champ d'en-tête d'identification du type de message désigné également par TYP,
- un champ d'adresse $VCI_1$ de la borne fixe radio future $BFR_1$ et enfin,
- un champ d'information relatif au contexte d'appel transféré vers cette borne fixe radio future.

Lorsque la borne fixe radio future $BFR_1$ comporte plusieurs autres bornes fixes radio voisines, seule la borne fixe radio $BFR_2$ étant active vis-à-vis de l'émetteur-récepteur radio ERR, seule cette même borne fixe radio $BFR_2$ actuelle active répond au message de requête $M_{12}$ transmis par la borne fixe radio future $BFR_1$ vis-à-vis de toutes ces bornes voisines.

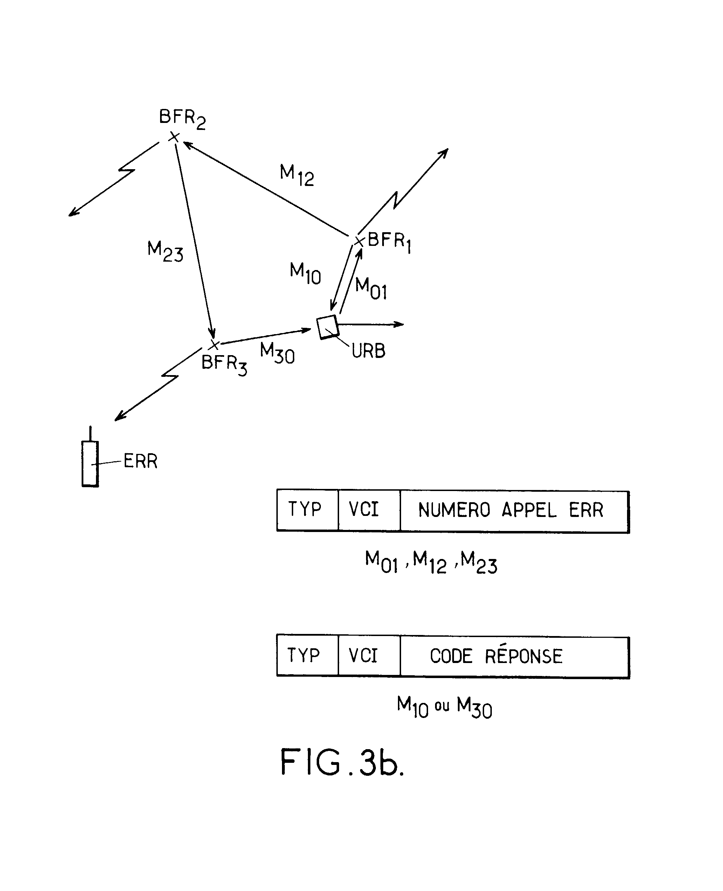

Le protocole objet de la présente invention peut également être mis en oeuvre de manière particulièrement avantageuse dans le cas de la gestion d'appels entrants sur le réseau de téléphonie cellulaire engendré par un combiné téléphonique d'abonné CTA du réseau téléphonique commuté vers un émetteur-récepteur radio mobile ERR ainsi qu'il sera décrit maintenant en liaison avec la figure 3b.

Dans un tel cas et afin de gérer tout appel entrant précité, les messages de gestion peuvent comporter au moins un message d'appel entrant transmis à partir de l'unité de raccordement vers les bornes voisines. Ce message d'appel entrant comporte au moins un champ d'en-tête d'identification de message désigné par TYP sur la figure 3b et un champ d'identification de la borne voisine destinataire, le champ VCI précité.

Ce premier message est transmis par l'unité de raccordement URB vers, par exemple, la première borne $BFR_1$ sur la figure 3b selon la transaction $M_{01}$. Le message d'appel entrant comporte également un champ d'information relatif au numéro d'appel de l'émetteur-récepteur radio mobile ERR. Sur réception de ce message par la borne fixe radio $BFR_1$, le processus est alors le suivant :

- appel de l'émetteur-récepteur radio mobile ERR à partir du numéro d'appel contenu dans le champ d'information par la borne fixe radio $BFR_1$.
- Sur réponse de l'émetteur-récepteur radio ERR, lorsque celui-ci est situé dans la zone de couverture de la borne fixe radio $BFR_1$, transmission par la borne fixe radio $BFR_1$ d'un message de code réponse selon la transaction $M_{10}$ destiné à l'unité de raccordement.

Ce message de code réponse tel que représenté en figure 3b comporte au moins un champ d'en-tête d'identification de type message, TYP, un champ d'identification de l'unité de raccordement VCI et, enfin, un champ d'information code réponse permettant d'assurer l'aboutement de l'appel entrant du combiné téléphonique d'abonné et de l'émetteur-récepteur radio mobile ERR.

En l'absence de réponse de l'émetteur-récepteur radio mobile ERR, la borne fixe radio $BFR_1$ transmet sur l'anneau virtuel un message d'appel entrant vers la borne voisine $BFR_2$. Le processus d'appel est réitéré par la borne $BFR_2$ avec, en l'absence de réponse de l'émetteur-récepteur radio mobile, transmission par la borne $BFR_2$ d'un message d'appel entrant $M_{23}$ vers la borne $BFR_3$ pour réitération du processus précité.

Sur réponse de l'émetteur-récepteur radio mobile ERR, suite à appel de cet émetteur-récepteur radio mobile par la borne fixe radio $BFR_3$, la borne fixe radio précitée transmet vers l'unité de raccordement URB un message de code réponse selon une transaction $M_{30}$.

Enfin, le protocole objet de la présente invention peut être mis en oeuvre dans le cadre de la gestion dynamique automatique de ressources de transmission radioélectrique des bornes fixes radio.

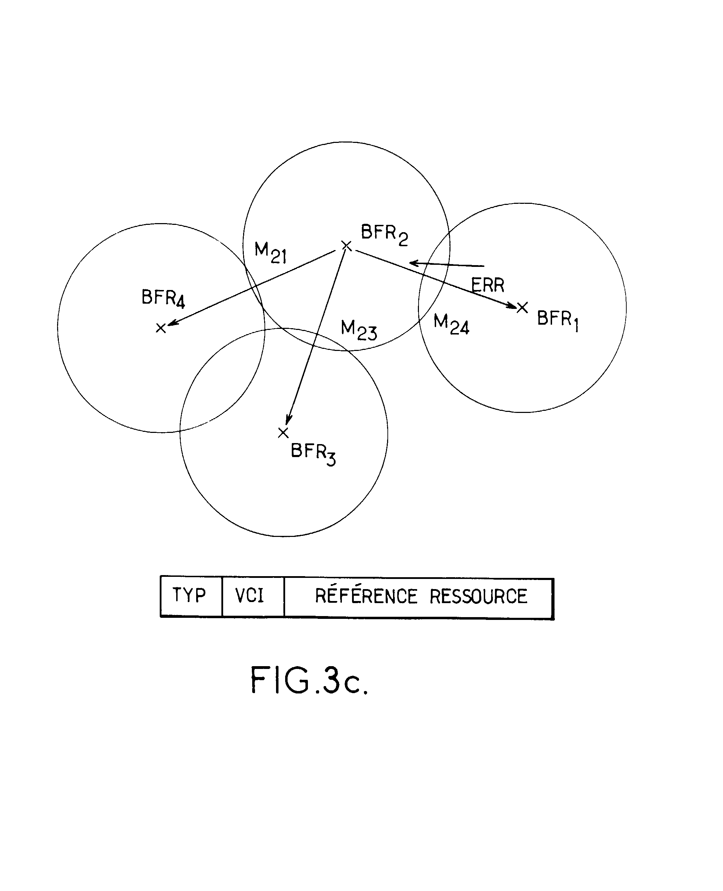

Dans un tel cas, ainsi que représenté en figure 3c, lorsque par exemple, de manière semblable au cas de la figure 3a, un émetteur-récepteur radio mobile a provoqué une procédure de T.A.I. ou gestion de "hand-over" entre une borne actuelle $BFR_4$ et une borne future $BFR_2$, la borne future procède alors à un processus de gestion automatique des ressources radioélectriques précitées. Cette gestion automatique consiste, pour la borne fixe radio future $BFR_2$, à assurer l'attribution adéquate de l'espace des fréquences et/ou d'intervalle de temps alloué à chaque borne fixe radio du réseau de téléphonie cellulaire mobile.

On comprend en particulier que pour un ensemble de fréquences attribué à un réseau de téléphonie cellulaire mobile et d'intervalles de temps successifs constitutifs de trames dans lesquelles les cellules d'information sont transmises, la borne fixe radio future $BFR_2$ transmet à toutes ses bornes fixes radio voisines un message de gestion dit message d'attribution automatique comportant au moins, ainsi que représenté en figure 3c :

- un champ d'en-tête d'identification de type de message, ce champ étant par convention référencé TYP,
- un champ d'identification de la borne voisine destinataire de ce message, champ désigné par VCI sur la figure 3c et correspondant à l'adresse des bornes fixes radio $BFR_1$, $BFR_3$ et $BFR_4$ et
- un champ de référence ressource, indicateur de la fréquence et/ou de l'intervalle de temps d'émission, utilisé par la borne fixe radio future, la borne fixe radio $BFR_2$ sur l'exemple en figure 3c.

Ces informations permettent alors, à chaque borne voisine, $BFR_1$, $BFR_3$, $BFR_4$ d'interdire pour la transaction avec l'émetteur-récepteur radio ERR considéré et dans l'application considérée, d'utiliser les mêmes ressources, c'est-à-dire la même fréquence que celle utilisée par la borne fixe radio future $BFR_2$ et/ou l'intervalle de temps correspondant.

On a ainsi décrit un protocole d'interconnexion entre bornes fixes radio d'un réseau de téléphonie cellulaire permettant la transmission de messages de gestion de ce réseau entre ces bornes particulièrement performant dans la mesure où l'introduction des coordonnées géographiques de chaque borne permet de simplifier et d'optimiser des procédures telles que la gestion du T.A.I. ou "hand-over", la gestion d'appels entrants ou l'attribution automatique de ressources de radiotéléphonie pour tout ensemble de bornes voisines considéré.

En outre, en ce qui concerne le repérage des bornes au moyen du réseau maillé, on indique que le pas du réseau peut être défini en fonction de la topologie du réseau de radiotéléphonie mobile et en particulier de la topologie d'implantation des bornes fixes radio.

On indique enfin que la finesse du maillage spatial du réseau maillé de repérage permet également de moduler la charge de traitement des messages au niveau de chaque borne fixe radio voisine, cette charge de traitement étant liée aux communications entre bornes voisines précitées.

## Revendications

1. Protocole d'intercommunication entre bornes fixes radio d'un réseau de téléphonie cellulaire pour la transmission de messages de gestion du réseau entre lesdites bornes, caractérisé en ce qu'il consiste au moins :

   a) à attribuer à chaque borne fixe radio appartenant audit réseau des coordonnées géographiques ;
   b) à constituer pour tout ensemble de deux bornes fixes radio successives, constituant des bornes voisines, une interconnexion en anneau virtuel ;
   c) à transmettre lesdits messages de gestion entre bornes voisines, lesdites bornes voisines étant identifiées à partir desdites coordonnées géographiques sur ledit anneau virtuel, ce qui permet la transmission desdits messages par intercommunication auto-adaptative entre l'ensemble des bornes fixes radio dudit réseau.

2. Protocole selon la revendication 1, caractérisé en ce que ladite interconnexion en anneau virtuel consiste, au niveau de chaque borne fixe radio, à établir un ensemble d'identificateurs de circuits des bornes voisines (VCI).

3. Protocole selon la revendication 2, caractérisé en ce que, pour des bornes fixes radio présentant une zone de voisinage de taille déterminée en émission-réception de valeur P, chaque identificateur de circuit des bornes voisines est formé par deux valeurs fonctions des coordonnées géographique et de la taille choisie pour la zone de voisinage des bornes fixes radio.

4. Protocole selon l'une des revendications 1 à 3, caractérisé en ce que lesdites coordonnées géographiques attribuées à chaque borne fixe radio sont établies dans un repère bi ou tridimensionnel établi selon un réseau maillé de pas $\Delta x$, $\Delta y$, $\Delta z$, chaque coordonnée vérifiant la relation

   $$k_x = E(x/\Delta x)$$
   $$k_y = E(y/\Delta y)$$
   $$k_z = E(z/\Delta z)$$

   relation dans laquelle

   - $\Delta x$, $\Delta y$, $\Delta z$ représente la valeur du pas du réseau maillé dans la direction correspondante x, y ou z ;
   - $k_x$, $k_y$, $k_z$ un coefficient réel représentatif de l'écart dans la direction correspondante x, y, z de la borne fixe radio par rapport à l'origine ;
   - E désigne la partie entière du rapport x/$\Delta x$, y/$\Delta y$ ou z/$\Delta z$.

5. Protocole selon l'une des revendications 1 à 4, caractérisé en ce que dans le cas de la gestion du T. A.I. (hand over) lors du passage d'un émetteur-récepteur radio mobile dans la zone de recouvrement de deux bornes fixes radio voisines, une borne fixe radio actuelle et une borne fixe radio future, lesdits messages de gestion comprennent :

- un message de requête de transfert automatique transmis de la borne fixe radio future vers la borne fixe radio actuelle, ledit message de requête comprenant au moins

  . un champ d'en-tête d'identification de type de message,
  . un champ d'adresse de la borne fixe radio actuelle,
  . un champ de requête de transfert du T.A.I. et en réponse à ce message de requête :

- un message de réponse de transfert de T.A.I. transmis de la borne fixe radio actuelle vers la borne fixe radio future comprenant au moins :

  . un champ d'en-tête d'identification de type de message,
  . un champ d'adresse de la borne fixe radio future,
  . un champ d'information relatif au contexte d'appel.

6. Protocole selon l'une des revendications 1 à 4, caractérisé en ce que, dans le cas de la gestion d'appels entrants sur le réseau de téléphonie cellulaire engendrés par un combiné téléphonique d'abonné du réseau téléphonique commuté vers un émetteur-récepteur radio mobile, lesdits messages de gestion comportent au moins :

- un message d'appel entrant transmis à partir de l'unité de raccordement vers les bornes voisines, ce message d'appel entrant comportant au moins :

  . un champ d'en--tête d'identification de message,
  . un champ d'identification de la borne voisine destinataire,
  . un champ de numéro d'appel de l'émetteur-récepteur radiomobile, et sur réponse audit message d'appel entrant par l'une des bornes voisines :

- un message de code réponse destiné à l'unité de raccordement, ce message de code réponse comportant au moins :

  . un champ d'en-tête d'identification du type de message,
  . un champ d'identification de l'unité de raccordement, ce qui permet d'assurer l'aboutement de l'appel entrant du combiné téléphonique d'abonné et de l'émetteur récepteur radio mobile.

7. Protocole selon l'une des revendications 1 à 4, caractérisé en ce que dans le cas de la gestion dynamique automatique de ressources lesdits messages de gestion transmis d'une borne fixe radio à une borne fixe radio voisine comportent au moins :

- un champ d'en-tête d'identification de type de message,
- un champ d'identification de la borne voisine destinataire de ce message,
- un champ de référence ressource indicateur de la fréquence et/ou de l'intervalle de temps d'émission utilisé par ladite borne fixe radio.

8. Protocole selon l'une des revendications 1 à 4, caractérisé en ce que la détermination de toute borne fixe radio voisine est effectuée à partir d'une liste des coordonnées géographiques des bornes fixes radio voisines possibles.

CTA

RTPC

BFR₂

UAP

ERR

URB

BFR₁

LIAISON
SPÉCIALISÉE

CAP

FIG.1a. (Art antérieur)

BFR₃

CTA

RTPC

BFR₂

UAP

ERR

URB

BFR₁

LIAISON
SPÉCIALISÉE

CAP

FIG.1b. (Art antérieur)

BFR₃

ATTRIBUTION DE COORDONNÉES
D'ADRESSE GÉOGRAPHIQUE
x y z A CHAQUE BORNE
FIXE RADIO DU RÉSEAU — 1000

CONSTITUTION D'UNE INTERCONNEXION — 1001
EN ANNEAU VIRTUEL

DÉTERMINATION DES BORNES — 1001a
VOISINES

CORRESPONDANCE DES — 1001b
COORDONNÉES DES BORNES
VOISINES

INITIALISATION

TRANSMISSION DES MESSAGES — 1002
DE GESTION ENTRE BORNES
VOISINES

INTERCOMMUNICATION
AUTO - ADAPTATIVE

TRANSMISSION

FIG.2a.

11

# FIG.2b.

# FIG.2c.

FIG.2d.

FIG.2e.

| TYP | $VCI_2$ | REQ HO |
|-----|---------|--------|

$$M_{12}$$

| TYP | $VCI_1$ | ERR | CONTEXTE D'APPEL |
|-----|---------|-----|------------------|

$$M_{21}$$

# FIG.3a.

BFR$_2$

M$_{12}$

M$_{23}$

BFR$_1$

M$_{10}$

M$_{01}$

M$_{30}$

URB

BFR$_3$

ERR

| TYP | VCI | NUMERO APPEL ERR |
|-----|-----|------------------|

M$_{01}$ , M$_{12}$ , M$_{23}$

| TYP | VCI | CODE RÉPONSE |
|-----|-----|--------------|

M$_{10}$ ou M$_{30}$

FIG.3b.

| TYP | VCI | RÉFÉRENCE RESSOURCE |
|-----|-----|---------------------|

FIG.3c.

**Office européen des brevets**

# RAPPORT DE RECHERCHE EUROPEENNE

Numéro de la demande

EP 97 40 2137

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 282 299 A (MOTOROLA LTD) 29 mars 1995<br>* page 1, ligne 20-21 *<br>* page 2, ligne 3-12 *<br>* page 2, ligne 32-34 *<br>* page 3, ligne 9-10 *<br>* page 3, ligne 21-24 *<br>--- | 1 | H04Q7/36<br>H04Q11/04 |
| A | WO 95 35612 A (PHILIPS ELECTRONICS NV ;PHILIPS NORDEN AB (SE)) 28 décembre 1995<br>* page 2, ligne 8-16 *<br>* page 3, ligne 31 - page 4, ligne 4 *<br>--- | 1 | |
| A | GB 2 290 195 A (NORTHERN TELECOM LTD) 13 décembre 1995<br>* page 3, ligne 26 - page 4, ligne 10 *<br>* page 5, ligne 30 - page 7, ligne 8 *<br>----- | 1 | |

**DOMAINES TECHNIQUES RECHERCHES (Int.Cl.6)**

H04Q

Le présent rapport a été établi pour toutes les revendications

| Lieu de la recherche | Date d'achèvement de la recherche | Examinateur |
|---|---|---|
| LA HAYE | 17 décembre 1997 | Dhondt, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)